# EUROPÄISCHE PATENTSCHRIFT

(11) **EP 0 703 029 B1**
(45) Veröffentlichungstag und Bekanntmachung des Hinweises auf die Patenterteilung: **18.07.2001**
(21) Anmeldenummer: 95110525.3
(22) Anmeldetag: 06.07.1995
(51) Int. Cl.: B22F 5/00, C22C 33/02, F16B 13/06

(54) **Verfahren zur Herstellung von ineinandergreifenden Metallteilen**
Process for preparing interlocking metal parts
Procédé de préparation de parties métalliques emboitées

(30) Priorität: 25.08.1994 DE 4430130
(43) Veröffentlichungstag der Anmeldung: 27.03.1996
(73) Patentinhaber: fischerwerke Artur Fischer GmbH & Co. KG, 72178 Waldachtal (DE)
(72) Erfinder: Arnold, Norbert, Dr., D-72178 Waldachtal (DE); Hein, Bernd, Dipl.-Ing. (FH), D-72250 Freudenstadt (DE); Seibold, Günter, Dipl.-Ing. (FH), D-72285 Pfalzgrafenweiler (DE); Haage, Manfred, Dipl.-Ing. (FH), D-72280 Dornstetten (DE); Plocher, Bernd, Dipl.-Ing. (FH), D-72108 Rottenburg (DE)

(56) Entgegenhaltungen:
- DE-A- 2 652 630
- DE-A- 3 146 361
- GB-A- 2 097 503
- US-A- 4 145 798
- DATABASE WPI Section Ch, Week 8906 Derwent Publications Ltd., London, GB; Class A88, AN 89-041614 & JP-A-63 312 506 ( TOA GOSEI CHEM IND LTD) , 21.Dezember 1988

## Beschreibung

Die Erfindung betrifft ein Verfahren zur Herstellung von ineinandergreifenden und unter Druck aufeinandergleitenden Metallteilen gemäß der Gattung des Anspruches 1.

Unter Druck aufeinandergleitender Metallteile kommen vor allem in der Befestigungstechnik bei Metallspreizdübeln vor, die üblicherweise aus einer Spreizhülse und einem in die Spreizhülse zu deren Verankerung einzieh- oder einschlagbaren Spreizkörper bestehen. Werden die beiden bei der Verankerung aufeinandergleitenden Teile des Metallspreizdübels aus Korrosionsschutzgründen aus dem gleichen, eine austenitische Gefügestruktur aufweisenden rostfreien Edelstahl hergestellt, kommt es bei hohen Spreizdrücken während des Verankerungsvorganges zum Fressen der beiden aufeinandergleitenden Flächen. Durch dieses Fressen wird die Funktion des Spreizdübels erheblich beeinträchtigt. Insbesondere ist ein solcher Dübel für einen Einsatz in der Zugzone ungeeignet, da wegen fehlendem Nachspreizverhalten eine Bohrlocherweiterung durch Rißbildung nicht ausgeglichen werden kann.

Aus diesem Grund ist es üblich, bei einem Metallspreizdübel aus austenitischem Stahl, die Teile aus Stählen mit einer unterschiedlichen Gefügestruktur herzustellen. Da diese jedoch nur in Großmengen herstell- und lieferbar sind, ist diese Möglichkeit in den meisten Fällen nicht anwendbar. Desweiteren wird auch keine ausreichende Homogenität in der Gefügestruktur der Stähle erreicht, die mit ausreichender Sicherheit eine Verringerung der Fressneigung bewirkt.

Aus der GB-A-2 097 503 ist ein Spreizdübel mit einem Gewindebolzen als Spreizkörper, der in eine Spreizhülse einschraubbar ist, bekannt. Die Herstellung der Spreizhülse erfolgt durch Sintern eines Metallpulvers. Als Korrosionsschutz wird der Spreizhülse ein korrosionshemmendes Material wie Zink oder Pre-Polymere aus Plastik zugesetzt. Das korrosionshemmende Material wird in flüssigem Zustand durch Tränken der Spreizhülse in deren Poren eingebracht. Das Sintern hat den Nachteil, daß lediglich geometrisch einfache Formen ohne Hinterschneidungen herstellbar sind.

Der Erfindung liegt die Aufgabe zugrunde, bei ineinandergreifenden Metallteilen, die funktionsbedingt unter Druck aufeinandergleiten müssen, eine Verringerung der Freßneigung zu erreichen.

Die Lösung dieser Aufgabe wird durch die Verfahrensschritte gemäß Anspruch 1 erreicht. Es wird ein insbesondere hülsenförmiges Teil im Metallpulverspritzgußverfahren (MIM-Verfahren) hergestellt. Zu diesem Zweck wird das Metallpulver mit den gewünschten, ebenfalls in Pulverform vorliegenden Legierungszusätzen gemischt und in einem beheizten Kneter mit Hilfe polymerer organischer Bindemittel (Wachse, Kunststoffe) plastifiziert und anschließend granuliert. Damit ist eine Verarbeitung auf herkömmlichen Spritzgußmaschinen möglich. Als Form dient ein Spritzgußwerkzeug mit ähnlichem Aufbau wie ein Kunststoff-Spritzgußwerkzeug.

Die spritzgegossenen Formkörper (Grünlinge) werden zum Ausscheiden des Bindemittels in einen Entbinderungsofen gesetzt. In dem Entbinderungsprozeß zerbrechen die Molekülketten des Bindemittels durch thermische oder chemische Zersetzung. Gleichzeitig findet eine Vorsinterung der metallischen Formkörper statt, die diesen eine ausreichende Stabilität verleiht. Beim Sintern, das im Vakuum oder unter Schutzgas durchgeführt wird, erhalten die metallischen Spritzgußteile ihre endgültige Werkstoffeigenschaft und Form. Durch das erfindungsgemäße Verfahren ist es möglich, Kleinmengen von unterschiedlichen Stählen einzusetzen und Fertigprodukte herzustellen.

Dem Metallpulver wird eine gegenüber diesem inerte Substanz beigemischt, von der sich einzelne Moleküle oder Molekülklumpen an einigen Stellen des Gitters innerhalb der Gefügestruktur oder an deren Korngrenzen des im MIM-Verfahren hergestellten Metallteiles ablagern. Dadurch stehen sich zwei Materialien mit geringfügig unterschiedlicher Gefügestruktur gegenüber. Als besonders geeignete, dem Metallpulver beizumischende Substanz haben sich keramische Feststoffe wie Bariumsulfat (BaSO₄) oder Titandioxid (TiO₂) erwiesen.

Die Erfindung hat den Vorteil, daß sie eine schwierige, spanabhebende Bearbeitung von austenitischen Stählen vermeidet. Die Beimischung der gegenüber dem Metallpulver inerten Substanz führt zu einer gewünschten Verminderung der Fressneigung beim Aufeinandergleiten zweier Metallteile unter Druck. Die gegenüber dem Metallpulver inerte Substanz weist eine Temperaturbeständigkeit von wenigstens 900° C auf, so daß sie sich beim Ausscheiden des Bindemittels aus dem spritzgegossenen Formkörper (Grünling) im Entbinderungsofen nicht zersetzt, verflüssigt oder verflüchtigt.

Ein ähnlicher Effekt wie mit Bariumsulfat (BaSO₄) oder Titandioxid (TiO₂) kann daduch erreicht werden, daß als Substanz ein Fulleren, vorzugsweise C₆₀-Fulleren dem Metallpulver beigemischt wird. Das kugelförmige C₆₀-Kohlenstoffmolekül erzeugt an der Oberfläche des Metallteiles eine Schmierschicht mit besonders günstigen Gleiteigenschaften. Die Gleitfähigkeit kann durch unterschiedliche Gewichtsanteile der beigemischten Substanz beeinflußt werden. Für die Beimischung von Fulleren genügen Gewichtsanteile von 0,01 bis 1 ‰, für keramische Feststoffe sind höhere Gewichtsanteile zweckmäßig.

Die Herstellung der beiden ineinandergreifenden Metallteile ist in der Weise möglich, daß beide Teile in voneinander unabhängigen Fertigungsverfahren hergestellt und anschließend in einem Montageverfahren zusammengefügt werden. Zur Einsparung des Montageverfahrens ist es allerdings auch möglich, die ineinandergreifenden Metallteile in der Weise herzustellen, daß auf ein Teil im Spritzgußverfahren eine Trennschicht aus Kunststoff aufgebracht wird, daß anschließend auf die Trennschicht das weitere Teil im Pulverspritzguß aufgespritzt wird, wobei die Dicke der Trennschicht mindestens dem Schwund des weiteren Teiles entspricht, und daß nach dem Spritzvorgang beim Entbinderungs- und Sinterprozeß die Trennschicht und das Bindemittel ausgeschieden werden.

Das erfindungsgemäße Verfahren wird nachfolgend anhand von einem Ausführungsbeispiel näher erläutert.

Es zeigen:
- Figur 1: eine Prinzipdarstellung des Formnestes zum Einspritzen der Trennschicht auf einen Metallbolzen als Einlegeteil,
- Figur 2: das Formnest zum Aufspritzen des zweiten Metallteiles auf die Trennschicht und
- Figur 3: den Metallbolzen mit aufgebrachter Spreizhülse nach dem Entbinderungs- und Sinterprozeß.

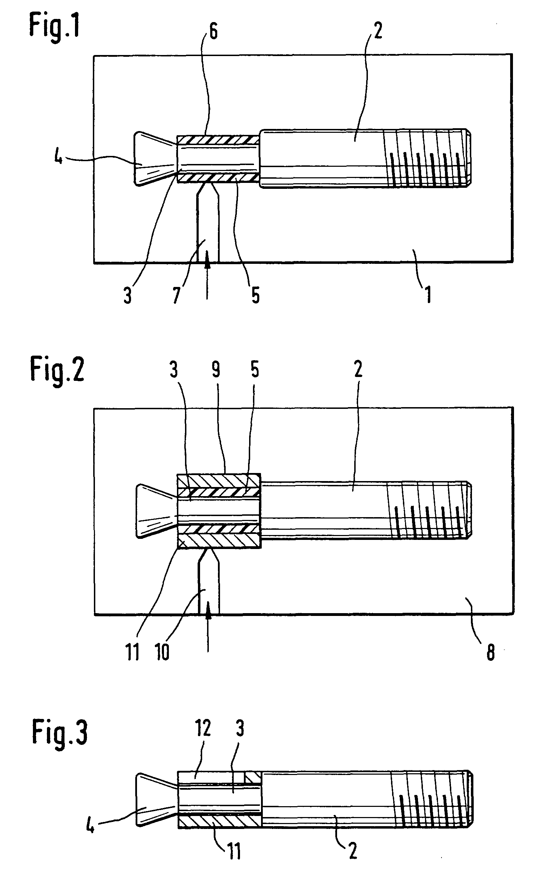

In den Figuren 1, 2 und 3 sind schematisch in Form von Prinzipskizzen die Verfahrensstufen zur Herstellung zweier ineinandergreifender Metallteile anhand eines Spreizankers dargestellt. Der in das Formnest 1 eingelegte, in herkömmlicher Weise oder im Metallspritzgußverfahren hergestellte Metallbolzen 2 weist einen reduzierten Abschnitt 3 auf, an den sich ein Spreizkonus 4 anschließt.

Zum Aufbringen der aus Kunststoff bestehenden Trennschicht 5 auf den reduzierten Abschnitt 3 weist das Formnest einen den reduzierten Abschnitt umgebenden Hohlraum 6 auf. Dieser Hohlraum wird im ersten Spritzgang über den Spritzkanal 7 ausgefüllt. Nach dem Einlegen des mit der Trennschicht 5 versehenen Bolzens 2 in die Spritzform 8 (siehe Figur 2) wird in den Hohlraum 9 die mit dem Bindemittel vermengte Metallpulvermischung durch den Spritzkanal 10 eingespritzt. In der Metallpulvermischung ist bereits in einem separaten Arbeitsgang die Substanz, beispielsweise ein keramischer Feststoff oder das Fulleren beigemischt, die in dem in Figur 3 dargestellten Endzustand des herzustellenden Befestigungselementes die gewünschte Gleiteigenschaft herbeiführt. Nach dem Einspritzen der Pulvermischung ergibt sich eine formschlüssige Anordnung des als Spreizhülse 11 ausgebildeten weiteren Teils auf dem reduzierten Abschnitt 3 des Bolzens 2. Anschließend erfolgt der Entbinderungs- und Sinterprozeß, bei dem sowohl das Bindemittel als auch die Trennschicht ausgeschieden werden. Der durch die Dicke der Trennschicht 5 geschaffene Freiraum ermöglicht die beim Entbindern und Sintern entstehende Schwindung der Spreizhülse 11. Die Dicke der Trennschicht 5 ist im dargestellten Ausführungsbeispiel so bemessen, daß zwischen der Spreizhülse 11 und dem reduzierten Abschnitt 3 des Bolzens 2 ein die axiale Verschiebung ermöglichendes Spiel verbleibt. Die Hülse 11 kann mit ein oder mehreren Längsschlitzen 12 versehen sein, so daß beim Einziehen des Spreizkonusses 4 in die Spreizhülse 11 eine Aufspreizung erfolgt.

Bei der Verankerung des Befestigungselementes in einem Bauteil wird durch das die Spreizhülse umgebende Material des Bauteiles beim Spreizvorgang ein Druck ausgeübt, der insbesondere bei der Kombination zweier identischer Stähle zum Fressen der beiden aufeinandergleitenden Flächen führen könnte. Aufgrund der in dem im Metallspritzgußverfahren hergestellten Teil eingelagerten Substanz ergibt sich eine Gefügestruktur dieses Metallteiles, die zu einem günstigen Gleitverhalten führt. Das erfingungsgemäße Verfahren ist daher insbesondere für ein beispielhaft in Figur 3 dargestelltes Befestigungselement 2 geeignet, bei dem durch axiale Verschiebung zwischen einem Spreizkörper 3 und einer Spreizhülse 11 eine Spreizwirkung erzielt werden soll.

## Patentansprüche

1. Verfahren zur Herstellung von ineinandergreifenden und unter Druck aufeinandergleitenden Metallteilen, insbesondere zur Herstellung eines aus einer Spreizhülse und einem Spreizkörper bestehenden und durch axiale Verschiebung des Spreizkörpers in der Spreizhülse verankerbaren Befestigungselementes, wobei wenigstens ein Metallteil aus einem Metallpulver hergestellt wird, dem eine in Pulver- oder Granulatform vorliegende, nichtmetallische Substanz mit einer Molekularstruktur beigemischt wird, die gegenüber dem Metall inert ist, **dadurch gekennzeichnet**, daß das wenigstens eine aus Metallpulver hergestellte Metallteil im Pulverspritzguß hergestellt wird, und daß die beigemischte Substanz eine Temparaturbeständigkeit von wenigstens 900°C aufweist.

2. Verfahren nach Anspruch 1, **dadurch gekennzeichnet**, daß als Substanz dem Metallpulver ein keramischer Feststoff z.B. Bariumsulfat (BaSO₄) oder Titandioxid (TiO₂) beigemischt wird.

3. Verfahren nach Anspruch 1, **daduch gekennzeichnet**, daß als Substanz dem Metallpulver ein Fulleren, vorzugsweise das C₆₀-Fulleren beigemischt wird.

4. Verfahren nach Anspruch 1, **dadurch gekennzeichnet,** daß der Gewichtsanteil der Substanz im Metallpulver 0,01 bis 100 ‰ beträgt.

5. Verfahren nach Anspruch 3, **dadurch gekennzeichnet,** daß der Gewichtsanteil des Fulleren im Metallpulver 0,01 bis 1 ‰ beträgt.

6. Verfahren nach Anspruch 1, **dadurch gekennzeichnet,** daß auf ein Teil (2) im Spritzgußverfahren eine Trennschicht (5) aus Kunststoff aufgebracht wird, daß anschließend auf die Trennschicht (5) das weitere Teil (11) im Pulverspritzguß aufgespritzt wird, wobei die Dicke der Trennschicht mindestens dem Schwund des weiteren Teiles (11) entspricht, und daß nach dem Spritzgußvorgang beim Entbinderungs- und Sinterprozeß die Trennschicht und das Bindemittel ausgeschieden werden.

## Claims

1. A method for the manufacture of interlocking metal parts that slide under pressure on one another, in particular for the manufacture of a fixing element consisting of an expansible sleeve and an expander body and anchorable by axial displacement of the expander body in the expansible sleeve, wherein at least one metal part is manufactured from powdered metal, with which a non-metallic substance having a structured arrangement of molecules is admixed in powdered or granular form, the substance being inert towards the metal, characterised in that the at least one metal part manufactured from powdered metal is manufactured by powder injection moulding, and the admixed substance has a thermal stability of at least 900 °C.

2. A method according to claim 1, characterised in that a ceramic solid material, for example, barium sulphate (BaSO₄) or titanium dioxide (TiO₂), is the substance admixed with the powdered metal.

3. A method according to claim 1, characterised in that a fullerene, preferably the C₆₀ fullerene, is the substance admixed with the powdered metal.

4. A method according to claim 1, characterised in that the proportion by weight of the substance in the powdered metal is 0.01 to 100 ‰.

5. A method according to claim 3, characterised in that the proportion by weight of the fullerene in the powdered metal is 0.01 to 1 ‰.

6. A method according to claim 1, characterised in that a separation layer (5) of plastics material is applied to a part (2) by injection-moulding, subsequently the further part (11) is injected onto the separation layer (5) by powder injection-moulding, the thickness of the separation layer corresponding at least to the contraction of the further part (11), and after the injection-moulding operation the separation layer and the binder are eliminated during the binder-removal and sintering process.

## Revendications

1. Procédé de préparation de parties métalliques qui s'emboîtent et coulissent sous pression l'une sur l'autre, en particulier pour fabriquer un élément de fixation composé d'une coquille ou douille d'expansion et d'un corps d'expansion et pouvant être ancré par décalage axial du corps d'expansion dans la coquille ou douille d'expansion, dans lequel au moins une partie métallique est préparée dans une poudre métallique à laquelle est mélangée une substance non métallique se présentant sous la forme de poudre ou de granules et présentant une structure moléculaire qui est inerte par rapport au métal, **caractérisé en ce que** la pièce métallique au moins fabriquée dans une poudre métallique est préparée par moulage par injection de poudre, et en ce que la substance ajoutée présente une résistance à la température au moins égale à 900°C.

2. Procédé selon la revendication 1, caractérisé en ce que l'on ajoute à la poudre métallique en tant que substance une matière solide céramique, par exemple du sulfate de baryum (BaSO₄) ou du dioxyde de titane (TiO₂).

3. Procédé selon la revendication 1, caractérisé en ce que l'on ajoute à la poudre métallique en tant que substance un fullerène, de préférence le fullerène C₆₀.

4. Procédé selon la revendication 1, caractérisé en ce que la fraction en masse de la substance dans la poudre métallique est comprise entre 0,01 et 100 ‰ en masse.

5. Procédé selon la revendication 3, caractérisé en ce que la fraction en masse du fullerène dans la poudre métallique est comprise entre 0,01 et 1‰.

6. Procédé selon la revendication 1, caractérisé en ce qu'est appliquée sur une partie (2), lors du procédé de moulage par injection, une couche de séparation (5) en matière synthétique, en ce que l'on applique ensuite sur la couche de séparation (5) l'autre partie (11) par moulage par injection de poudre, l'épaisseur de la couche de séparation correspondant au moins au retrait de l'autre partie (11), et en ce que, après le procédé de moulage par injection, on sépare la couche de séparation et le liant lors du procédé de déliantage et de frittage.
